# EUROPÄISCHE PATENTSCHRIFT

(11) **EP 3 122 611 B1**
(45) Veröffentlichungstag und Bekanntmachung des Hinweises auf die Patenterteilung: **13.11.2019**
(21) Anmeldenummer: 15712566.7
(22) Anmeldetag: 18.03.2015
(51) Int. Cl.: B62D 1/19, F16F 7/12

(54) **LENKSÄULE FÜR EIN KRAFTFAHRZEUG**
STEERING COLUMN FOR A MOTOR VEHICLE
COLONNE DE DIRECTION DESTINÉE À UN VÉHICULE AUTOMOBILE

(30) Priorität: 28.03.2014 DE 102014104354
(43) Veröffentlichungstag der Anmeldung: 01.02.2017
(73) Patentinhaber: ThyssenKrupp Presta AG, 9492 Eschen (LI); thyssenkrupp AG, 45143 Essen (DE)
(72) Erfinder: REGNER, Sebastian, 88138 Hergensweiler (DE); SCHNITZER, Hieronymus, CH-9487 Gamprin (LI); MANNECK, Carsten, A-6800 Feldkirch (AT); SAWALL, Stefan, CH-9473 Gams (CH)
(74) Vertreter: thyssenkrupp Intellectual Property GmbH
(86) Internationale Anmeldenummer: PCT/EP2015/055667
(87) Internationale Veröffentlichungsnummer: WO 2015/144521

(56) Entgegenhaltungen:
- WO-A1-2012/084144
- DE-A1-102007 002 091
- DE-B3-102006 020 650
- JP-A- 2008 230 266

## Beschreibung

### Technisches Gebiet

Die vorliegende Erfindung betrifft eine Lenksäule für ein Kraftfahrzeug mit einer mit dem Chassis des Kraftfahrzeugs verbindbaren Trageinheit und einer an der Trageinheit gehaltenen Verschiebeeinheit, welche gegenüber der Trageinheit im Crashfall verschiebbar ist, wobei das Energieabsorptionselement lokale Verfestigungen aufweist.

### Stand der Technik

Lenksäulen in Kraftfahrzeugen sind bekannt, bei welchen eine mit dem Chassis des Kraftfahrzeugs verbindbare Trageinheit, beispielsweise in Form von Konsolenteilen, vorgesehen ist, und eine an der Trageinheit gehaltene Verschiebeeinheit, welche beispielsweise ein Mantelrohr umfasst, vorgesehen ist, wobei in der Verschiebeeinheit eine Lenkspindel drehbar gelagert ist. Die Verschiebeeinheit ist dabei gegenüber der Trageinheit verschiebbar angeordnet, um im Crashfall durch eine entsprechende Verschiebung der Verschiebeeinheit gegenüber der mit dem Chassis verbundenen Trageinheit eine Nachgiebigkeit des Lenkrades bereitzustellen, um das Crashverhalten zu verbessern. Bei der Verschiebung der Verschiebeeinheit gegenüber der Trageinheit wird über eine Energieabsorptionsvorrichtung, welche ein Energieabsorptionselement aufweist, Crashenergie absorbiert, wobei hier unterschiedliche Ausgestaltungen bekannt sind, über welche Crashenergie über den Verschiebungsweg der Verschiebeeinheit gegenüber der Trageinheit hinweg kontrolliert absorbiert werden kann.

Beispielsweise ist aus der DE 10 2005 052 123 B3 eine Lenksäule bekannt, bei welcher zwischen der Trageinheit und der Verschiebeeinheit ein an der Verschiebeeinheit festgelegtes Energieabsorptionsteil vorgesehen ist, welches ein Langloch aufweist. In dem Langloch ist ein an einer Schiene festgelegter und Verbreiterungen aufweisender Bolzen geführt, welcher im Normalbetrieb über ein Feststellelement an der Trageinheit festgelegt ist. Im Crashfall kann so eine Bewegung des Bolzens in dem Langloch stattfinden, wobei aufgrund der Verbreiterungen des Bolzens eine Verformung des Energieabsorptionsteils und insbesondere des Langlochs des Energieabsorptionsteils so stattfindet, dass eine kontrollierte Energieabsorption über den Verschiebungsweg hinweg erreicht wird.

In der DE 10 2008 034 807 B3 wird ein alternatives Konzept verfolgt, wobei hier ebenfalls eine Verschiebeeinheit gegenüber einer Trageinheit verschiebbar angeordnet ist, wobei sich die Verschiebeeinheit und die Trageinheit im Normalbetrieb nicht gegeneinander verschieben, im Crashfall jedoch eine Verschiebung der Verschiebeeinheit gegenüber der Trageinheit zur Energieabsorption vorgesehen ist. Zwischen einem Eingriffsteil, welches im Normalbetrieb an der Trageinheit festgelegt ist, und einer Schiene, welche an der Verschiebeeinheit festgelegt ist, ist ein Biegestreifen vorgesehen, welcher derart ausgestaltet ist, dass er im Crashfall bei einer Verschiebung der Verschiebeeinheit gegenüber der Trageinheit auf definierte Weise durch seine Verformung Energie absorbiert.

Über die Energieabsorptionsmechanismen, also beispielsweise die Verformung des Langlochs des Energieabsorptionsteils beziehungsweise der Verformung des Biegedrahts oder Biegestreifens kann entsprechend ein vorgegebenes Kraft-Weg Verhalten für die Energieabsorption der Crashenergie über den Verschiebungsweg für den Crashfall vorgegeben sein, da die Relativverschiebung zwischen der Trageinheit und der Verschiebeeinheit stets die gleiche sein kann und durch die Längsverstellung der Lenksäule nicht verändert ist.

Die beschriebenen Energieabsorptionsmechanismen benötigen für ihren Aufbau jeweils mindestens drei Teile in Form eines Eingriffsteils, einer Schiene und dem Bolzen beziehungsweise dem Biegestreifen.

Aus der DE 10 2007 002 091 A1 ist eine Lenksäule mit einer Crasheinrichtung bekannt, bei welcher eine Sicke als Crasheinrichtung vorgesehen ist, welche durch die Verschiebung des Führungskastens während des Crashs deformiert wird.

Als Energieabsorptionselemente sind aus dem Stand der Technik unterschiedliche geometrische Konfigurationen bekannt, beispielsweise Biegelaschen, Biegedrähte, Biegereißlaschen und Crashsicken. Für jede Anpassung des Energieabsorptionsniveaus an einen Fahrzeugtypen müssen die aus dem Stand der Technik bekannten Energieabsorptionselemente jeweils bezüglich ihrer Geometrie und/oder bezüglich ihres Materials und der Materialstärke angepasst werden. Dies erfordert entsprechend für jedes auf diese Weise angepasste Energieabsorptionselement Investitionen in neue Werkzeuge und in die entsprechenden Versuche.

Aus der JP 2008-230266 A ist es bekannt, lokale Verfestigungen eines Energieabsorptionselements einer Lenksäule mittels mechanischer oder thermischer Verfestigung zu erzeugen. Die darin beschriebenen Verfahren sind jedoch aufwendig oder ermöglichen nicht die erforderliche Genauigkeit.

### Darstellung der Erfindung

Ausgehend von dem bekannten Stand der Technik ist es entsprechend eine Aufgabe der vorliegenden Erfindung, eine Lenksäule zur Verfügung zu stellen, bei welcher das Energieabsorptionsniveau einfacher anpassbar ist.

Diese Aufgabe wird durch eine Lenksäule mit den Merkmalen des Anspruchs 1 gelöst. Vorteilhafte Weiterbildungen ergeben sich aus den abhängigen Ansprüchen.

Entsprechend wird eine Lenksäule für ein Kraftfahrzeug vorgeschlagen, umfassend eine mit dem Chassis des Kraftfahrzeugs verbindbare Trageinheit und eine gegenüber dieser im Crashfall entlang eines Verschiebewegs verschiebbare Verschiebeeinheit, wobei zwischen Trageinheit und Verschiebeeinheit ein Energieabsorptionselement angeordnet ist, welches im Crashfall Energie über den Verschiebeweg hinweg absorbiert. Erfindungsgemäß weist das Energieabsorptionselement lokale Laserverfestigungen auf.

Dadurch, dass das Energieabsorptionselement lokale Laserverfestigungen aufweist, lässt sich das Energieabsorptionsniveau des Energieabsorptionselementes durch Wahl der Geometrie, Anzahl, Form und Dicke der lokalen Laserverfestigungen einstellen. Damit kann erreicht werden, dass das Energieabsorptionselement für unterschiedliche Anwendungen, beispielsweise zum Einbau in unterschiedliche Kraftfahrzeuglenksäulentypen, jeweils individuell an die Anforderungen angepasst werden kann, ohne dass die Geometrie, das Material oder die Materialstärke des Energieabsorptionselementes selbst verändert werden müsste. Vielmehr genügt es, das Energieabsorptionselement mit Laserenergie so zu beaufschlagen, dass lokale Laserverfestigungen bereitgestellt werden, die je nach Fahrzeugtyp variieren. Durch die lokale Laserverfestigung wird das Gefüge des Grundwerkstoffes des Energieabsorptionselements dahingehend verändert, dass eine partiellen Steigerung der Härte erreicht wird und dadurch eine Veränderung/Steigerung der Festigkeitskennwerte in dem partiellen Bereich erzielt wird.

Damit kann auf Investitionen in zusätzliche Werkzeuge zur Herstellung unterschiedlicher Energieabsorptionselemente für unterschiedliche Fahrzeugtypen verzichtet werden. Vielmehr kann mit einem einzigen Ausgangs-Energieabsorptionselement durch die entsprechende Variation der Gestalt der lokalen Laserverfestigungen eine Vielzahl unterschiedlicher Anforderungen an den Kraft-Weg-Verlauf des Energieabsorptionselements abgedeckt werden.

Für ein entsprechend vorgegebenes Energieabsorptionsniveau muss daher nur noch die Breite, Anzahl, Anordnung und/oder Form der lokalen Laserverfestigungen ermittelt werden, welche das Energieabsorptionsniveau bereitstellen und dann diese lokalen Laserverfestigungen in das Ausgangs-Energieabsorptionselement eingebracht werden. Damit kann mit einem identischen Aufbau der Lenksäule eine große Anzahl unterschiedlicher Kraftfahrzeugtypen bedient werden, wobei lediglich durch Beaufschlagung des Ausgangs-Energieabsorptionselementes mit den entsprechenden Laserlichtpatterns die entsprechende, für den jeweiligen Kraftfahrzeugtypen geeignete und geforderte lokale Laserverfestigung des Energieabsorptionselementes erreicht wird.

Das Energieabsorptionselement kann beispielsweise eine Biegelasche, ein Biegedraht, eine Biegereißlasche und/oder eine Crashsicke sein, welche dann entsprechend über eine zumindest lokale Laserverfestigung mittels Beaufschlagung mit Laserenergie in ihrem jeweiligen Energieabsorptionsniveau an die Anforderungen des jeweiligen Kraftfahrzeugtypen angepasst werden können.

Die lokale Laserverfestigung in dem Energieabsorptionselement kann linienförmig, polygonförmig, zick-zack-förmig, mäanderförmig, in der Fläche des Energieabsorptionselementes liegend, entlang der Außenkontur und/oder entlang der Innenkontur des Energieabsorptionselementes liegend, als Linie, als Teilfläche und/oder vollflächig vorgesehen sein, um nur einige der möglichen Geometrien zur Beaufschlagung des Energieabsorptionselementes mit der Laserenergie zu beschreiben.

Bevorzugt weist das Energieabsorptionselement lokale Laserverfestigungen auf, welche aus zwei unterschiedlichen möglichen lokalen Laserverfestigungen ausgewählt wurden, welche in Breite, Anzahl und/oder Anordnung variieren. Damit kann aus einer vorgegebenen Auswahl an unterschiedlichen lokalen Laserverfestigungen einfach die für den jeweiligen Fahrzeugtypus angemessene ausgewählt werden.

Bevorzugt ist das Energieabsorptionselement ausgewählt aus mindestens zwei Energieabsorptionselementen, welche das gleiche Material, die gleiche Geometrie und die gleiche Materialstärke aufweisen, aber ungleiche lokale Laserverfestigungen aufweisen, um das für den jeweiligen Kraftfahrzeugtypen gewünschte Absorptionsniveau bereitzustellen.

Das Energieabsorptionselement kann beispielsweise zwischen einem Tragelement in Form einer mit dem jeweiligen Kraftfahrzeug anbindbaren Konsole und einem dieser gegenüber verschiebbaren Halteschlitten, welcher zum Halten eines Führungskastens der Lenksäule dient, angeordnet sein.

Das Energieabsorptionselement kann auch zwischen einem Tragelement, welches am Chassis des Kraftfahrzeugs festlegbar ist, und einem Verstellelement zur Positionsverstellung einer Lenkspindel zur Positionsverstellung eines am fahrerseitigen Ende der Lenkspindel aufgenommenen Lenkrad angeordnet sein, welche gegeneinander im Crashfall ebenfalls verschiebbar ausgebildet sind.

Die oben genannte Aufgabe wird weiterhin durch ein Verfahren mit den Merkmalen des Anspruchs 9 gelöst. Vorteilhafte Weiterbildungen ergeben sich aus den Unteransprüchen.

Entsprechend wird ein Verfahren zum Anpassen des Energieabsorptionsverhaltens einer Lenksäule an einen Kraftfahrzeugtypus vorgeschlagen, wobei die Lenksäule ein Energieabsorptionselement umfasst. Erfindungsgemäß werden lokale Laserverfestigungen in das Energieabsorptionselement eingebracht, um das Energieabsorptionsverhalten des Energieabsorptionselements an den Fahrzeugtyp anzupassen.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Ansicht einer Lenksäule in einem ersten Ausführungsbeispiel;
- Figur 2: eine schematische Seitenansicht der Lenksäule aus Figur 1 in einer Ausgangsposition zur Verwendung im normalen Fahrbetrieb;
- Figur 3: eine schematische Seitenansicht der Lenksäule aus den Figuren 1 und 2 nach einer Verschiebung einer Verschiebeeinheit gegenüber einer Trageinheit nach einer Krafteinwirkung im Crashfall;
- Figur 4: ein Energieabsorptionselement in Form einer Biegereißlasche mit einer lokalen Laserverfestigung in einer Ausführungsform;
- Figur 5: ein Energieabsorptionselement in Form einer Biegereißlasche mit einer lokalen Laserverfestigung in einer weiteren Ausführungsform;
- Figur 6: ein Energieabsorptionselement in Form einer Biegereißlasche mit einer lokalen Laserverfestigung in einer weiteren Ausführungsform;
- Figur 7: ein Energieabsorptionselement in Form einer Biegereißlasche mit einer lokalen Laserverfestigung in einer weiteren Ausführungsform;
- Figur 8: ein Energieabsorptionselement in Form einer Biegereißlasche mit einer lokalen Laserverfestigung in einer weiteren Ausführungsform;
- Figur 9: eine schematische perspektivische Ansicht einer Lenksäule im Ausgangszustand in einem weiteren Ausführungsbeispiel;
- Figur 10: ein Energieabsorptionselement in Form einer Biegelasche für die in Figur 9 gezeigte Lenksäule in einer Ausführungsform;
- Figur 11: ein Energieabsorptionselement in Form einer Biegelasche für die in Figur 9 gezeigte Lenksäule in einer weiteren Ausführungsform;
- Figur 12: ein Energieabsorptionselement in Form einer Biegelasche für die in Figur 9 gezeigte Lenksäule in einer weiteren Ausführungsform;
- Figur 13: eine schematische perspektivische, teilweise auseinandergezogene Darstellung einer weiteren Lenksäule;
- Figur 14: eine schematische Seitenansicht des Haltekastens der Lenksäule aus Figur 13 mit einem Energieabsorptionselement in Form einer Crashsicke;
- Figur 15: eine schematische perspektivische Ansicht eines Energieabsorptionselements in Form einer Crashhülse in einer Ausführungsform; und
- Figur 16: eine schematische perspektivische Ansicht eines Energieabsorptionselements in Form einer Crashhülse in einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

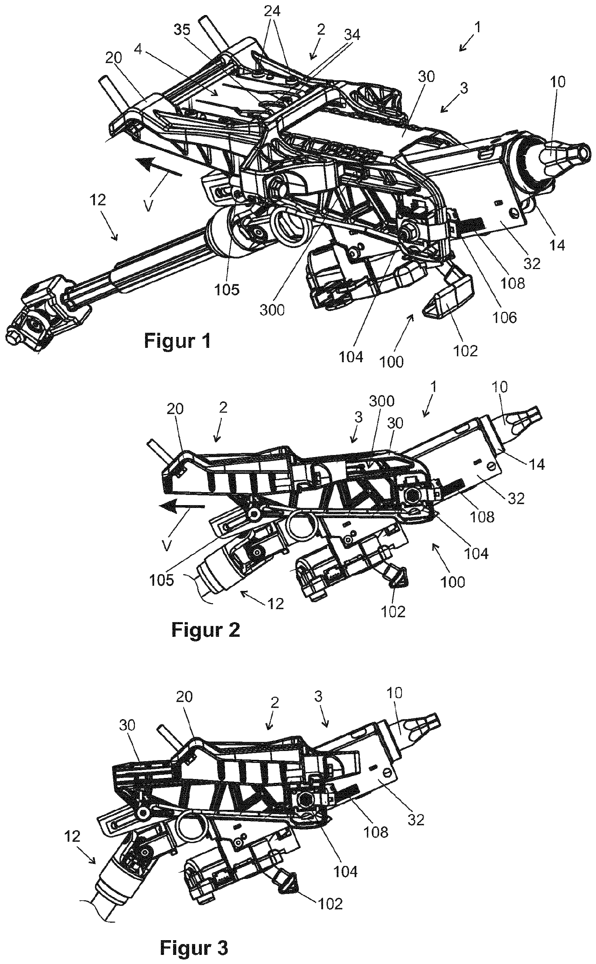

In den Figuren 1 bis 3 ist eine Lenksäule 1 gezeigt, welche eine Lenkspindel 10 trägt, an deren fahrerseitigem Ende ein hier nicht gezeigtes Lenkrad anbringbar ist, über welches der Fahrer dann ein Lenkmoment auf die Lenkspindel 10 aufbringen kann. Von der Lenkspindel 10 aus wird das Lenkmoment über eine Lenkwelle 12 auf ein nicht gezeigtes Lenkritzel übertragen, welches mit einer ebenfalls nicht gezeigten Zahnstange kämmt, die dann ihrerseits über entsprechende Spurstangen den vorgegebenen Lenkwinkel auf die lenkbaren Räder des Kraftfahrzeugs überträgt. Eine elektrische und/oder hydraulische Hilfskraftunterstützung kann vorgesehen sein, um das über die Lenkspindel 10 eingetragene Lenkmoment zu unterstützen oder um einen zusätzlichen Lenkwinkel in das Lenksystem einzubringen, der sich dann mit dem vom Fahrer über das Lenkrad aufgebrachten Lenkwinkel summiert.

Die Lenksäule 1 umfasst eine Trageinheit 2 mit einer Konsole 20, welche mit dem Chassis eines Kraftfahrzeugs verbindbar ist.

An der Trageinheit 2 ist eine Verschiebeeinheit 3 gehalten, welche entlang eines Verschiebeweges gegenüber der Trageinheit 2 verschiebbar ist. Die Verschiebeeinheit 3 umfasst einen Halteschlitten 30, welcher einen Führungskasten 32 hält, in welchem ein Mantelrohr 14 mit der darin drehbar gelagerten Lenkspindel 10 angeordnet ist.

Die Verschiebeeinheit 3 ist gegenüber der Trageinheit 2 im Crashfall entlang eines schematisch durch den Pfeil V angedeuteten Verschiebeweges verschiebbar. Um diese Verschiebbarkeit bereit zu stellen, ist der Halteschlitten 30 über eine Klemmführung 300 an der Trageinheit 2 gehalten, ist aber im Crashfall nach Überwindung der durch die Klemmung bereitgestellten Haftreibung entsprechend verschiebbar.

Um eine Verschiebung der Verschiebeeinheit 3 gegenüber der Trageinheit 2 im Normalbetrieb zu verhindern, bei einer Verschiebung aber eine definierte Energieabsorption entlang des ganzen Verschiebeweges V bereit zu stellen, ist ein Energieabsorptionselement 4 vorgesehen, welches zwischen Trageinheit 2 und Verschiebeeinheit 3 angeordnet ist. Bei einer Verschiebung der Verschiebeeinheit 3, beispielsweise des Halteschlittens 30, gegenüber der Trageinheit 2, beispielsweise der Konsole 20, reißt und/oder verformt sich das Energieabsorptionselement 4 und absorbiert dabei Crashenergie über den Verschiebeweg V hinweg. Die Crashenergie wird dabei üblicherweise durch das Auftreffen des Fahrers auf das hier nicht gezeigte Lenkrad eingetragen, derart, dass die Verschiebeeinheit 3 gegenüber der Trageinheit 2 verschoben wird.

In den Figuren 2 und 3 sind zwei unterschiedliche Positionen der Verschiebeeinheit 3 relativ zur Trageinheit 2 gezeigt. In der Figur 2 ist die Ausgangsposition der Lenksäule 1 gezeigt, in welcher der Halteschlitten 30 nicht gegenüber der Trageinheit 2 verschoben ist. In dieser Ausgangsposition der Lenksäule 1 findet der Normalbetrieb des Kraftfahrzeugs statt.

In Figur 3 hingegen ist die Verschiebeeinheit 3 in Form des Halteschlittens 30 gegenüber der Trageinheit 2 so entlang des Verschiebeweges V verschoben, dass die Lenkspindel 10 gegenüber ihrer Ausgangsposition um den Verschiebeweg V zurückgewichen ist. Diese Konfiguration nimmt die Lenksäule 1, insbesondere die Verschiebeeinheit 3, ein, wenn die Verschiebeeinheit 3 den gesamten Verschiebeweg V durchlaufen hat und entsprechend an einem hinteren Ende des Verschiebewegs angekommen ist. Zumindest ein Teil der über das Lenkrad in die Lenksäule 1 und insbesondere auf die Verschiebeeinheit 3 eingetragenen Crashenergie konnte so über den Verschiebeweg zwischen der Ausgangsposition und der verschobenen Position hinweg durch das Energieabsorptionselement 4 definiert absorbiert werden. Das Energieabsorptionselement 4 wird dabei verformt und/oder gerissen.

Das Energieabsorptionselement 4 ist in dem gezeigten Ausführungsbeispiel als Biegereißlasche ausgebildet, welche sich sowohl umbiegt, als auch an vorgekerbten Stellen aufreißt. Die Energiedissipation durch das Energieabsorptionselement 4 findet entsprechend durch das Reißen und das Biegen des Materials des Energieabsorptionselements 4 statt.

Der Führungskasten 32 kann gegenüber dem Halteschlitten 30 sowohl verschoben als auch geneigt werden, um eine Positionseinstellung des fahrerseitigen Endes der Lenkspindel 10 zur Anpassung der Position des an der Lenkspindel 10 angebrachten Lenkrads an die jeweilige Sitzposition des Fahrers des Kraftfahrzeugs durchführen zu können. Um diese Verstellung der Position zu erreichen, ist ein an sich bekannter Spannmechanismus 100 gezeigt, bei welchem über einen Spannhebel 102 ein Spannbolzen 104 betätigt wird. In einer ersten Stellung des Spannhebels 102 ist der Spannbolzen 104 gespannt und in einer zweiten Stellung des Spannhebels 102 ist der Spannbolzen 104 gelöst. In der gelösten Stellung des Spannhebels 102 kann ein an dem Halteschlitten 30 angeordneter Klemmstein 106 aus einer entsprechenden, zu diesem komplementären und an dem Führungskasten 32 angeordneten Klemmverzahnung 108 so heraus gehoben werden, dass der Führungskasten 32 entlang der durch die Achse der Lenkspindel 10 definierten Richtung der Länge nach gegenüber dem Halteschlitten 30 verschoben werden kann.

Bei geöffnetem Spannbolzen 104 kann auch eine Verschwenkung des Führungskastens 32 um die durch eine Schwenkachse 105 definierte Achse herum durchgeführt werden, so dass das hier nicht gezeigte Lenkrad im Kraftfahrzeuginnenraum an die Sitzposition des Fahrers sowohl mittels einer Längsverstellung als auch mittels einer Höhenverstellung angepasst werden kann. Ist eine für den Fahrer ideale Position gefunden, so wird über den Spannhebel 102 diese Position für den Fahrbetrieb wieder verriegelt. Eine solche Positionsverstellung für eine Lenksäule 1 ist prinzipiell bekannt.

Das Energieabsorptionselement 4 ist über Befestigungsbolzen 24 mit der Konsole 20 und entsprechend mit der Trageinheit 2 verbunden. Das Energieabsorptionselement 4 ist weiterhin über Befestigungsbolzen 34 mit dem Halteschlitten 30 und entsprechend mit der Verschiebeeinheit 3 verbunden. Entsprechend ist das Energieabsorptionselement 4 sowohl mit der Verschiebeeinheit 3 als auch mit der Trageinheit 2 fest verbunden und zwischen diesen angeordnet. Solange das Energieabsorptionselement 4 nicht verformt wird, sorgt es für eine feste Positionsbeziehung zwischen Trageinheit 2 und Verschiebeeinheit 3. Das Energieabsorptionselement 4 ist entsprechend so dimensioniert, dass es einer Verschiebung der Verschiebeeinheit 3 gegenüber der Trageinheit 2 im Normalbetrieb entgegenwirkt. Damit kommt es weder beim normalen Fahren des Kraftfahrzeugs, noch dann, wenn sich der Fahrer beispielsweise beim Ein- und Aussteigen am Lenkrad abstützt, zu einer Verformung des Energieabsorptionselements 4 und damit auch nicht zu einer Verschiebung der Verschiebeeinheit 2 gegenüber der Trageinheit 3.

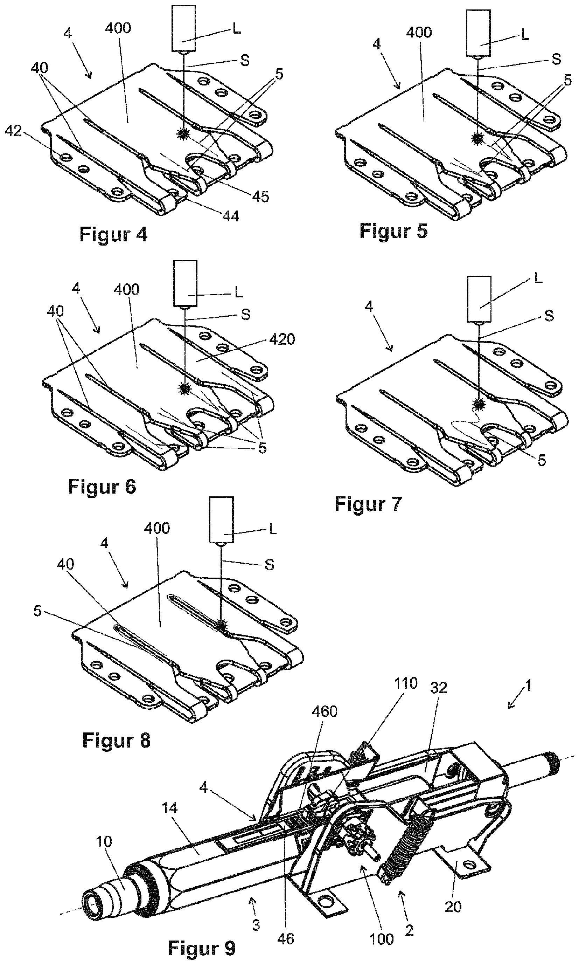

In den Figuren 4 bis 8 sind unterschiedliche Konfigurationen des Energieabsorptionselements 4 gezeigt, welches mit der in den Figuren 1 bis 3 gezeigten Lenksäule 1 verwendet werden kann.

Die geometrische Grundform, das Material sowie die Materialstärke sind bei den in den Figuren 4 bis 8 gezeigten Energieabsorptionselementen 4 identisch. Mit anderen Worten ist die Blechplatine, auf deren Grundlage das Energieabsorptionselement 4 gebogen wird, in allen Ausführungsformen gleich und auch die zur Herstellung erforderlichen Stanz- und Biegewerkzeuge sind für alle Energieabsorptionselemente 4 gleich. Mit anderen Worten ist das Ausgangs-Energieabsorptionselement 4 für alle Ausführungen identisch.

Das Energieabsorptionselement 4 umfasst Ausnehmungen 42, durch welche hindurch die Befestigungsbolzen 24 zur Befestigung des Energieabsorptionselementes 4 an der Trageinheit 2 geführt werden können. Weiterhin sind Ausnehmungen 44 vorgesehen, durch welche hindurch die Befestigungsbolzen 34 zur Befestigung des Energieabsorptionselementes 4 an der Verschiebeeinheit 3 und insbesondere am Halteschlitten 30 geführt werden. In einer bevorzugten Ausgestaltung ist auch mindestens eine Ausnehmung 45 zum Einführen eines Verriegelungsbolzens 35 vorgesehen. Der Verriegelungsbolzen 35 kann im Crashfall bevorzugt pyrotechnisch aus der Ausnehmung 45 herausgezogen werden, wenn das Energieabsorptionsniveau des Energieabsorptionselements 4 abgesenkt werden soll. Dies kann beispielsweise dann gewünscht sein, wenn detektiert wurde, dass der Fahrer angegurtet ist. Ist der Fahrer nicht angegurtet, so verbleibt der Verriegelungsbolzen 35 in der Ausnehmung 45 und ein höheres Energieabsorptionsniveau wird bereitgestellt.

Das Energieabsorptionselement 4 ist in dem gezeigten Ausführungsbeispiel als Biegereißlasche ausgebildet und weist Kerben 40 auf, entlang welcher das Energieabsorptionselement 4 im Crashfall aufreißen kann. Gleichzeitig wird eine durch das Reißen ausgebildete Lasche 400 im Crashfall verbogen. Damit findet eine Energieabsorption sowohl durch den Biegevorgang der Lasche 400, als auch durch das Aufreißen des Energieabsorptionselementes 4 entlang der Kerben 40 statt, so dass Energie über den gesamten Verschiebeweg hinweg absorbiert werden kann.

Um nun das Energieabsorptionselement 4 zur Verwendung mit unterschiedlichen Fahrzeugtypen, welche unterschiedliche Anforderungen an das Energieabsorptionsverhalten stellen, verwenden zu können, werden Bereiche des Energieabsorptionselements 4 einer lokalen Laserverfestigung 5 unterzogen.

Bei der lokalen Laserverfestigung bringt ein Laserstrahl Verfestigungsspuren in das Material der Grundplatine des Energieabsorptionselements 4 ein. Dabei werden die Verfestigungsspuren mit dem Laser bevorzugt in die unbehandelte Blechplatine eingebracht. Für härtbare Stähle wird dazu die vom Schweißen dieser Werkstoffe bekannte martensitische Aufhärtung im Nahtbereich gezielt zur lokalen Laserverfestigung genutzt.

Um die lokale Laserverfestigung zu erreichen, wird ein in den Figuren 4 bis 8 schematisch angedeuteter Laser L verwendet, welcher einen in den Figuren 4 bis 8 schematisch angedeuteten fokussierten Laserstrahl S mit einer definierten Geschwindigkeit über die Oberfläche der bereits fertig gebogenen Blechplatine führt. Durch den konzentrierten Wärmeeintrag wird eine lokale Erwärmung erreicht, welche zu einem Härten des Materials oder zum kurzzeitigen Aufschmelzen mit einer anschließenden Erstarrung, einem sogenannten Umschmelzhärten, führt. Durch die schnelle Wärmeableitung ins angrenzende kalte Material kann eine schnelle Abkühlung des erhitzten oder aufgeschmolzenen Materials erreicht werden. Dadurch kommt es zu einer lokalen Phasenänderung, beispielsweise einer martensitischen Aufhärtung, im Werkstoffgefüge des Energieabsorptionselements 4 und damit zu einem deutlichen Festigkeitsanstieg. Damit kann das Energieabsorptionsverhalten des Energieabsorptionselements 4 abhängig von der Form, Anzahl, Anordnung und Breite der lokalen Laserverfestigungen 5 variiert werden kann.

Die lokalen Laserverfestigungen 5 können mit einer hohen Prozessgeschwindigkeit durch das Bestrahlen mit dem Laserstrahl S in das Energieabsorptionselement 4 eingebracht werden. Damit lässt sich eine Variation des Energieabsorptionsverhaltens des Energieabsorptionselements 4 auf schnelle und kostengünstige Weise erreichen. Insbesondere muss für diese Anpassung die Geometrie, das Material sowie die Materialstärke des Ausgangs-Energieabsorptionselements 4 nicht verändert werden.

Im Crashfall finden üblicher Weise komplexe und schnelle Deformationsvorgänge in dem Energieabsorptionselement 4 statt. Durch die lokalen Laserverfestigungen 5 wird der Deformationswiderstand des Energieabsorptionselements 4 variiert und kann so zum Erreichen eines gewünschten Energieabsorptionsniveaus beitragen. Dabei können sowohl Stauch- als auch Biegebeanspruchungen in ihrem Verhalten variiert werden.

In dem in Figur 4 gezeigten Ausführungseispiel ist schematisch der Laser L gezeigt, welcher in dem Energieabsorptionselement 4 eine lokale Laserverfestigung 5 durch Beaufschlagung des Materials mit Laserenergie durch den Laserstrahl S einbringt. Die lokale Laserverfestigung 5 ist in dem in Figur 4 gezeigten Ausführungsbeispiel in Form zweier parallel zueinander angeordneter Linien ausgebildet, welche sich in der Lasche 400 erstrecken und welche sich in Richtung der Kerben 40 und damit auch in Aufreißrichtung erstrecken.

Unter dem Begriff "Linie" oder "linienförmig" wird hier ein Bereich mit endlicher Breite und einer deutlich längeren Erstreckung in Linienrichtung, als in Breitenrichtung verstanden. Insbesondere ist keine mathematische Linie damit gemeint. Üblicher Weise wird die Linienbreite durch den Durchmesser und die Energie des auf dem Material des Energieabsorptionselements 4 auftreffenden Laserstrahls S bestimmt.

Über das Einbringen der lokalen Laserverfestigungen 5 mittels des Lasers L kann eine entsprechende Materialveränderung im Energieabsorptionselement 4 derart hervorgerufen werden, dass die Energieabsorptionseigenschaften des Energieabsorptionselements 4 durch die lokalen Laserverfestigungen 5 beeinflusst werden.

In Figur 5 ist ein weiteres Energieabsorptionselement 4 in einem weiteren Ausführungsbeispiel gezeigt, welches die gleiche Grundstruktur aufweist, wie das in Figur 4 gezeigte Energieabsorptionselement 4. Die mittels des Lasers L eingebrachten lokalen Laserverfestigungen 5 sind aber in einer anderen Konfiguration beziehungsweise einer anderen Form in das Energieabsorptionselement 4 eingebracht. In dem in Figur 5 gezeigten Ausführungsbeispiel sind die lokalen Laserverfestigungen 5 in Form einer Zick-Zack-Linie in der Lasche 400 gezeigt.

In Figur 6 sind lokale Laserverfestigungen 5 nicht nur im Bereich der Lasche 400 vorgesehen, sondern auch in den nicht die Lasche ausbildenden Teilen 420 des Energieabsorptionselements 4. Die lokalen Laserverfestigungen 5 in den nicht die Lasche ausbildenden Teilen 420 sind als gerade, sich parallel zu den Kerben 40 erstreckende Verfestigungslinien ausgebildet. Die in der Lasche 400 vorgesehenen lokalen Laserverfestigungen 5 sind wiederum in Form einer Zick-Zack-Linie angeordnet.

In Figur 7 ist eine weitere Ausführungsform eines Energieabsorptionselementes 4 gezeigt, bei welchem eine lokale Laserverfestigung 5 in Form einer mäanderförmigen Linie durch den Laser L eingebracht wird.

In Figur 8 hingegen ist ein Energieabsorptionselement 4 gezeigt, bei welchem lokale Laserverfestigungen 5 bereitgestellt werden, welche den Konturen der Kerben 40 der Lasche 400 folgen. Neben der Anpassung des Energieabsorptionsniveaus wird durch die Verfestigung entlang der Kontur der Kerben 40 das definierte Reißen der Biegereißlasche in den Kerben begünstigt, da die angrenzenden Bereiche der Kerbe eine erhöhte Festigkeit aufweisen.

Die zur Erzielung der für die jeweiligen Anforderungen an das Energieabsorptionsverhalten des Energieabsorptionselements 4 notwendigen lokalen Laserverfestigungen 5 können entweder über Versuche ermittelt werden, oder mittels numerischer Berechnungsverfahren bestimmt werden.

Mittels des Einbringens der lokalen Laserverfestigungen 5 in das Energieabsorptionselement 4 kann erreicht werden, dass das Energieabsorptionsverhalten des Energieabsorptionselements 4 je nach Geometrie, Anzahl, Form und Dicke der lokalen Laserverfestigungen 5 variiert. Entsprechend kann auch beim Bereitstellen von gleichen Ausgangs-Energieabsorptionselementen 4, die die gleiche Geometrie, das gleiche Material und die gleiche Materialstärke aufweisen, durch eine Variation von Geometrie, Anzahl, Form und Dicke der lokalen Laserverfestigungen 5 ein unterschiedliches Energieabsorptionsverhalten erreicht werden. Damit kann mit einem Ausgangs-Energieabsorptionselement 4 eine Vielzahl von Energieabsorptionsniveaus erreicht werden, so dass mit einer einzelnen Grundform eines Energieabsorptionselementes 4 eine Vielzahl unterschiedlicher Kraftfahrzeugtypen, welche jeweils unterschiedliche Anforderungen an das Energieabsorptionsniveau haben, ausgerüstet werden können.

Auf diese Weise ergibt sich ein flexibler und modularer Aufbau der Lenksäule 1 dahingehend, dass ein einziger Typus der Lenksäule 1 in einer Vielzahl unterschiedlicher Kraftfahrzeuge mit Gleichteilen eingebaut werden kann, und lediglich mittels eines Lasers L lokale Laserverfestigungen 5 in die jeweiligen Energieabsorptionselemente 4 eingebracht werden müssen, mittels welchen das jeweils erwünschte Energieabsorptionsniveau für den jeweiligen Fahrzeugtypus erreicht wird.

Das Einbringen der lokalen Laserverfestigungen 5 kann an unterschiedlichen Stationen im Herstellungsprozess erfolgen. Insbesondere kann es aber auch erfolgen, wenn die Lenksäule 1 bereits vollständig mit dem Energieabsorptionselement 4 montiert ist. Entsprechend kann das Anpassen der jeweiligen Lenksäule 1 auch kurz vor dem Einbau in das Kraftfahrzeug erfolgen.

Hierdurch lässt sich eine verbesserte Effizienz und Kostenstruktur bei der Herstellung der Lenksäule erreichen.

In Figur 9 ist eine schematische perspektivische Darstellung einer weiteren Lenksäule 1 gezeigt, welche ebenfalls eine Trageinheit 2 aufweist, gegenüber welcher eine Verschiebeeinheit 3, die ein Mantelrohr 14 umfasst, in einem Führungskasten 32 verschiebbar angeordnet ist. Das Mantelrohr 14, in welchem die Lenkspindel 10 drehbar gelagert ist, ist gegenüber dem Führungskasten 32 und auch gegenüber der Konsole 20 im Crashfall verschiebbar.

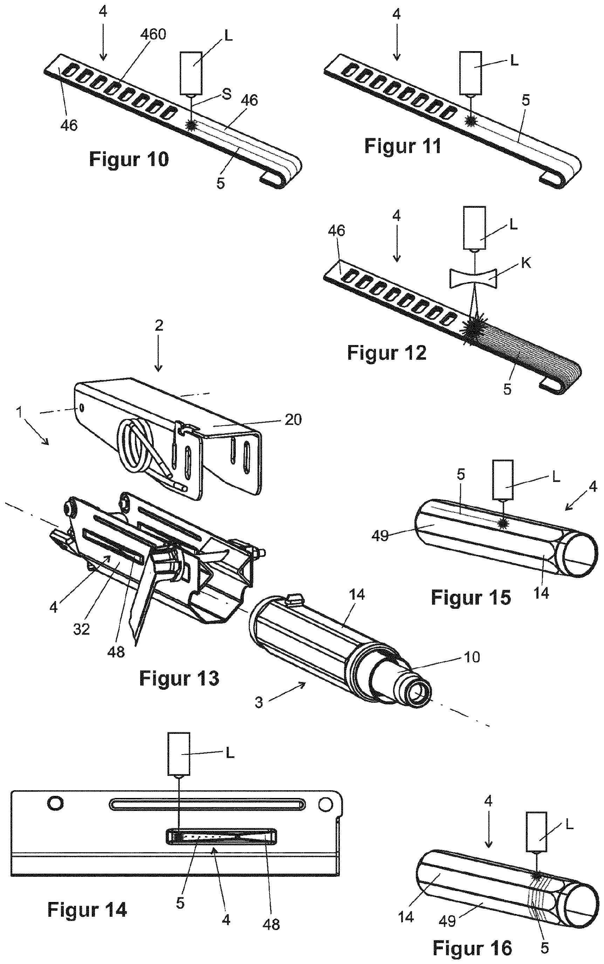

Ein Energieabsorptionselement 4 ist zwischen dem Mantelrohr 14 und dem Führungskasten 32 vorgesehen, wobei dieses Energieabsorptionselement in Form der beispielsweise in den Figuren 10 bis 12 in unterschiedlichen Ausprägungen gezeigten Biegelasche 46 dargestellt ist. Die Biegelasche 46 weist Ausnehmungen 460 auf, in welche Rastnocken 110 eines Spannmechanismus 100 eingreifen. So wird eine Längsverstellung des Mantelrohrs 14 in Richtung der Achse der Lenkspindel 10 gegenüber dem Führungskasten 32 ermöglicht, wenn der Rastnocken 110 nicht mit den Ausnehmungen 460 der Biegelasche 46 in Eingriff steht. Greift der Rastnocken 110 in die Ausnehmung 460 der Biegelasche 46 des Energieabsorptionselements 4 ein, so ist eine Längsverstellung der Lenksäule 1 nur noch unter Umformung der Biegelasche 46 möglich.

Entsprechend ist im Crashfall eine Verschiebung der Verschiebeeinheit 3, umfassend das Mantelrohr 14, gegenüber der Trageinheit 2, umfassend den Führungskasten 32, unter Verformung des Energieabsorptionselementes 4 in Form der Biegelasche 46 möglich.

In den Figuren 10 bis 12 ist jeweils die gleiche Grundgeometrie der Biegelasche 46 mit ihren Ausnehmungen 460 gezeigt und es sind unterschiedliche Ausbildungen der lokalen Laserverfestigungen 5 gezeigt, mittels welchen das Energieabsorptionsniveau des Energieabsorptionselementes 4 variiert werden kann. Entsprechend kann auch hier wieder mit dem gleichen Ausgangs-Energieabsorptionselement 4 durch eine entsprechende Behandlung zur Erzeugung der lokalen Laserverfestigungen 5 eine Variation des Energieabsorptionsverhaltens des Energieabsorptionselementes 4 erreicht werden.

In den Figuren 10 und 11 werden jeweils lokale Laserverfestigungen 5 in Form von sich entlang der Biegelasche 46 erstreckenden Linien (Figur 10) beziehungsweise einer einzigen Linie (Figur 11) exemplarisch gezeigt. In Figur 12 ist der Laser L unter Einsatz einer Aufweitoptik K aufgeweitet, so dass die lokale Laserverfestigung 5 hier im Wesentlichen die gesamte Fläche der Biegelasche 46 umfasst.

Das Prinzip in dem in den Figuren 9 bis 12 gezeigten Ausführungsbeispiel ist wiederum das gleiche, wie das in dem in den Figuren 1 bis 8 gezeigte Ausführungsbeispiel, nämlich wird ein zwischen einer Trageinheit 2 und einer Verschiebeeinheit 3 angeordnetes Energieabsorptionselement 4 für eine große Anzahl unterschiedlicher Einsatzbereiche aus einem Ausgangs-Energieabsorptionselement bereitgestellt, und die eigentliche Einstellung des Energieabsorptionsniveaus findet über das Einbringen von lokalen Laserverfestigungen 5 statt, welche jeweils an den gewünschten Einsatzzweck angepasst sind.

In den Figuren 13 und 14 ist noch ein weiteres Ausführungsbeispiel einer Lenksäule 1 gezeigt, wobei in Figur 13 eine Trageinheit 2, welche einen Führungskasten 32 und eine Konsole 20 aufweist und wobei in dem Führungskasten 32 die Verschiebeeinheit 3 in Form des Mantelrohrs 14 aufgenommen ist, welches ihrerseits die Lenkspindel 10 drehbar lagert.

In dem Führungskasten 32 ist ein Energieabsorptionselement 4 in Form einer Crashsicke 48 vorgesehen, welche zwischen der Verschiebeeinheit 3 und der Trageinheit 2 so angeordnet ist, dass bei einer Verschiebung der Verschiebeeinheit 3 gegenüber der Trageinheit 2 eine Deformation des Energieabsorptionselementes 4 in Form der Crashsicke 48 stattfindet.

Wie sich aus Figur 14 ergibt, kann mittels eines Lasers L das Energieabsorptionselement 4 in Form der Crashsicke 48 mit lokalen Laserverfestigungen 5 versehen werden, mittels welchen das Energieabsorptionsniveau des Energieabsorptionselementes 4 festgelegt werden kann und insbesondere variiert werden kann, wenn die Lenksäule 1 aus den Figuren 13 und 14 in unterschiedlichen Kraftfahrzeugtypen eingesetzt werden soll.

Die in die Crashsicke 48 eingebrachten lokalen Laserverfestigungen 5 können entsprechend wiederum bezüglich ihrer Form, ihrer Anzahl und ihrer Breite variieren, derart, dass unterschiedliche Energieabsorptionsniveaus der Crashsicke 48 bereitgestellt werden können. Der Führungskasten 32 mit der Crashsicke 48 und insbesondere die Crashsicke 48 kann als Grund-Energieabsorptionselement 4 entsprechend für eine Vielzahl unterschiedlicher Kraftfahrzeugtypen verwendet werden.

In den Figuren 15 und 16 ist ein weiteres Energieabsorptionselement 4 gezeigt, welches in Form eines Mantelrohrs 14 vorgesehen ist, welches als Crashhülse 49 ausgebildet ist und entsprechend wiederum zwischen einer Verschiebeeinheit und einer Trageinheit angeordnet ist. Im Crashfall kann sich das Energieabsorptionselement 4 unter Energieabsorption deformieren. Lokale Laserverfestigungen 5 können mittels eines Lasers L eingebracht werden, wobei in Figur 15 eine lokale Laserverfestigung 5 in Form einer sich in Achsenrichtung des Mantelrohrs 14 erstreckenden Linie aufgebracht ist, und in Figur 16 stattdessen eine lokale Laserverfestigung 5 gezeigt ist, welche sich helixförmig oder in äquidistant voneinander beabstandeten Umfangskreisen um das Mantelrohr 14 herum erstreckt.

### Bezugszeichenliste

- 1: Lenksäule
- 10: Lenkspindel
- 12: Lenkwelle
- 14: Mantelrohr
- 100: Spannmechanismus
- 102: Spannhebel
- 104: Spannbolzen
- 105: Schwenkachse
- 106: Klemmstein
- 108: Klemmverzahnung
- 110: Rastnocken
- 2: Trageinheit
- 20: Konsole
- 24: Befestigungsbolzen
- 3: Verschiebeeinheit
- 30: Halteschlitten
- 32: Führungskasten
- 34: Befestigungsbolzen
- 35: Verriegelungsbolzen
- 300: Klemmführung
- 4: Energieabsorptionselement
- 40: Kerbe
- 42: Ausnehmung
- 44: Ausnehmung
- 45: Ausnehmung
- 46: Biegelasche
- 48: Crashsicke
- 49: Crashhülse
- 400: Lasche
- 420: nicht die Lasche ausbildendes Teil
- 460: Ausnehmung
- 5: lokale Laserverfestigung
- L: Laser
- V: Verschiebeweg
- S: Laserstrahl
- K: Aufweitoptik

## Patentansprüche

1. Lenksäule (1) für ein Kraftfahrzeug, umfassend eine mit dem Chassis des Kraftfahrzeugs verbindbare Trageinheit (2) und eine gegenüber dieser im Crashfall entlang eines Verschiebewegs (V) verschiebbare Verschiebeeinheit (3), wobei zwischen Trageinheit (2) und Verschiebeeinheit (3) ein Energieabsorptionselement (4) angeordnet ist, welches im Crashfall Energie über den Verschiebeweg (V) hinweg absorbiert, wobei das Energieabsorptionselement (4) lokale Verfestigungen aufweist,
**dadurch gekennzeichnet, dass**
das Energieabsorptionselement (4) lokale Laserverfestigungen (5) aufweist.

2. Lenksäule (1) gemäß Anspruch 1, **dadurch gekennzeichnet, dass** das Energieabsorptionselement (4) eine Biegelasche (46), ein Biegedraht, eine Biegereißlasche, eine Crashsicke (48) und/oder eine Crashhülse (49) ist.

3. Lenksäule (1) gemäß Anspruch 1 oder 2, **dadurch gekennzeichnet, dass** die lokale Laserverfestigung (5) in dem Energieabsorptionselement (4) linienförmig, polygonförmig, zick-zack-förmig, mäanderförmig, in der Fläche des Energieabsorptionselementes (4) liegend, entlang der Außenkontur und/oder entlang der Innenkontur des Energieabsorptionselementes (4) liegend, als Linie, als Teilfläche und/oder vollflächig vorgesehen ist.

4. Lenksäule (1) gemäß einem der vorstehenden Ansprüche, **dadurch gekennzeichnet, dass** das Energieabsorptionselement (4) lokale Laserverfestigungen (5) aufweist, welche aus zwei unterschiedlichen möglichen lokalen Laserverfestigungen (5) ausgewählt sind, welche in Breite, Anzahl und/oder Anordnung variieren.

5. Lenksäule (1) gemäß einem der vorstehenden Ansprüche, **dadurch gekennzeichnet, dass** das Energieabsorptionselement (4) aus mindestens zwei gleichen Energieabsorptionselementen (4) mit unterschiedlichen lokalen Laserverfestigungen (5) je nach Anwendungsbereich der Lenksäule (1) ausgewählt ist.

6. Lenksäule (1) gemäß einem der vorstehenden Ansprüche, **dadurch gekennzeichnet, dass** das Energieabsorptionselement (4) zwischen einer Trageinheit (2) in Form einer Konsole (20) und einer Verschiebeeinheit (3), in Form eines Halteschlittens (3) zum Halten eines Führungskastens (32) angeordnet ist.

7. Lenksäule (1) gemäß einem der vorstehenden Ansprüche, **dadurch gekennzeichnet, dass** das Energieabsorptionselement (4) zwischen einer Trageinheit (2) und einer Verschiebeeinheit (3) in Form einer Lenksäulenverstellung angeordnet ist.

8. Lenksäule (1) gemäß einem der vorstehenden Ansprüche, **dadurch gekennzeichnet, dass** die lokale Laserverfestigung (5) durch eine Variation der Breite, Anzahl und/oder Anordnung der jeweiligen lokalen Laserverfestigungen (5) zur Auswahl eines gewünschten Energieabsorptionsniveaus des Energieabsorptionselementes (4) erreicht wird.

9. Verfahren zum Anpassen des Energieabsorptionsverhaltens einer Lenksäule (1), welche ein Energieabsorptionselement (4) umfasst, an einen Kraftfahrzeugtypus, **dadurch gekennzeichnet, dass** lokale Laserverfestigungen (5) in das Energieabsorptionselement (4) eingebracht werden.

10. Verfahren gemäß Anspruch 9, **dadurch gekennzeichnet, dass** Geometrie, Anzahl, Form und/oder Dicke der lokalen Laserverfestigungen (5) abhängig von dem gewünschten Energieabsorptionselement (4) gewählt werden.

## Claims

1. Steering column (1) for a motor vehicle, comprising a supporting unit (2) which is connectable to the chassis of the motor vehicle, and a displacement unit (3) which is displaceable in relation to said supporting unit along a displacement path (V) in the event of a crash, wherein an energy absorption element (4) is arranged between supporting unit (2) and displacement unit (3) and, in the event of a crash, absorbs energy over the displacement path (V), wherein the energy absorption element (4) comprises local solidifications,
**characterized in that**
the energy absorption element (4) comprises local laser solidifications (5).

2. Steering column (1) according to Claim 1, **characterized in that** the energy absorption element (4) is a bending tab (46), a bending wire, a bending tear tab, a crash bead (48) and/or a crash sleeve (49).

3. Steering column (1) according to Claim 1 or 2, **characterized in that** the local laser solidification (5) in the energy absorption element (4) is provided in a linear, polygonal, zigzag-shaped or meandering manner, in a manner lying in the area of the energy absorption element (4) or lying along the outer contour and/or along the inner contour of the energy absorption element (4), or as a line, as a partial surface and/or over the full surface.

4. Steering column (1) according to one of the preceding claims, **characterized in that** the energy absorption element (4) has local laser solidifications (5) which are selected from two different possible local laser solidifications (5) that vary in width, number and/or arrangement.

5. Steering column (1) according to one of the preceding claims, **characterized in that** the energy absorption element (4) is selected from at least two identical energy absorption elements (4) with different local laser solidifications (5) depending on the region of use of the steering column (1).

6. Steering column (1) according to one of the preceding claims, **characterized in that** the energy absorption element (4) is arranged between a supporting unit (2) in the form of a bracket (20) and a displacement unit (3) in the form of a holding slide (3) for holding a guide box (32).

7. Steering column (1) according to one of the preceding claims, **characterized in that** the energy absorption element (4) is arranged between a supporting unit (2) and a displacement unit (3) in the form of a steering column adjustment.

8. Steering column (1) according to one of the preceding claims, **characterized in that** the local laser solidification (5) is achieved by a variation in the width, number and/or arrangement of the respective local laser solidifications (5) in order to select a desired energy absorption level of the energy absorption element (4).

9. Method for adapting the energy absorption behavior of a steering column (1), which comprises an energy absorption element (4), to a type of motor vehicle, **characterized in that** local laser solidifications (5) are introduced into the energy absorption element (4).

10. Method according to Claim 9, **characterized in that** geometry, number, shape and/or thickness of the local laser solidifications (5) are selected depending on the desired energy absorption element (4) .

## Revendications

1. Colonne de direction (1) destinée à un véhicule automobile, comprenant une unité porteuse (2) susceptible d'être assemblée avec le châssis du véhicule automobile et une unité de translation (3) déplaçable par rapport à celle-ci en cas de collision le long d'un trajet de translation (V), entre l'unité porteuse (2) et l'unité de translation (3) étant placé un élément absorbeur d'énergie (4) qui en cas de collision absorbe de l'énergie le long du trajet de translation (V), l'élément absorbeur d'énergie (4) comportant des stabilisations locales,
**caractérisée en ce que**
l'élément absorbeur d'énergie (4) comporte des stabilisations locales au laser (5).

2. Colonne de direction (1) selon la revendication 1, **caractérisée en ce que** l'élément absorbeur d'énergie (4) est une patte flexible (46), un fil métallique flexible, une patte de déchirement flexible, un bourrelet protecteur en cas de collision (48) et/ou une douille protectrice en cas de collision (49).

3. Colonne de direction (1) selon la revendication 1 ou 2, **caractérisée en ce que** la stabilisation locale au laser (5) dans l'élément absorbeur d'énergie (4) est prévue sous forme linéaire, sous forme polygonale, en forme de zigzag, en forme de méandre, de manière à se situer dans la surface de l'élément absorbeur d'énergie (4), de manière à se situer le long du contour extérieur et/ou le long du contour intérieur de l'élément absorbeur d'énergie (4) sous la forme d'une ligne, d'une surface partielle et/ou à pleine surface.

4. Colonne de direction (1) selon l'une quelconque des revendications précédentes, **caractérisée en ce que** l'élément absorbeur d'énergie (4) comporte des stabilisations locales au laser (5), lesquelles sont choisies parmi deux différentes stabilisations locales au laser (5) possibles, lesquelles varient au niveau de la largeur, du nombre et/ou de leur placement.

5. Colonne de direction (1) selon l'une quelconque des revendications précédentes, **caractérisée en ce que** l'élément absorbeur d'énergie (4) est choisi parmi au moins deux éléments absorbeurs d'énergie (4) identiques, pourvus de différentes stabilisations locales au laser (5), en fonction du domaine d'application de la colonne de direction (1).

6. Colonne de direction (1) selon l'une quelconque des revendications précédentes, **caractérisée en ce que** l'élément absorbeur d'énergie (4) est placé entre une unité porteuse (2) sous la forme d'une console (20) et une unité de translation (3) sous la forme d'un chariot de maintien (3), destiné à maintenir un caisson de guidage (32).

7. Colonne de direction (1) selon l'une quelconque des revendications précédentes, **caractérisée en ce que** l'élément absorbeur d'énergie (4) est placé entre une unité porteuse (2) et une unité de translation (3) sous la forme d'un réglage de la colonne de direction.

8. Colonne de direction (1) selon l'une quelconque des revendications précédentes, **caractérisée en ce que** la stabilisation locale au laser (5) est obtenue par une variation de la largeur, du nombre et/ou du placement des stabilisations locales au laser (5) concernées pour le choix d'un niveau souhaité d'absorption d'énergie de l'élément absorbeur d'énergie (4).

9. Procédé, destiné à adapter les caractéristiques d'absorption d'énergie d'une colonne de direction (1), laquelle comprend un élément absorbeur d'énergie (4) sur un type de véhicule automobile, **caractérisé en ce qu'**on ménage des stabilisations locales au laser (5) dans l'élément absorbeur d'énergie (4).

10. Procédé selon la revendication 9, **caractérisé en ce que** la géométrie, le nombre, la forme et/ou l'épaisseur des stabilisations locales au laser (5) sont choisis en fonction de l'élément absorbeur d'énergie (4) souhaité.
